# FASCICULE DE BREVET EUROPEEN

(11) **EP 1 353 811 B1**
(45) Date de publication et mention de la délivrance du brevet: **20.02.2008**
(21) Numéro de dépôt: 01989052.4
(22) Date de dépôt: 20.12.2001
(51) Int. Cl.: B60C 13/00, B60C 15/024

(54) **PNEUMATIQUE AVEC ANNEAU ADDITIONEL**
FAHRZEUGLUFTREIFEN MIT EINEM KONZENTRISCH ZUM REIFEN ANGERORDNETEN RING
TYRE WITH ADDITIONAL RING

(30) Priorité: 17.01.2001 FR 0100630
(43) Date de publication de la demande: 22.10.2003
(73) Titulaire: Société de Technologie Michelin, 63000 Clermont-Ferrand Cedex 09 (FR); Michelin Recherche et Technique S.A., 1763 Granges-Paccot (CH)
(72) Inventeur: MUHLHOFF, Olivier, F-63100 Clermont-Ferrand (FR)
(74) Mandataire: Diernaz, Christian
(86) Numéro de dépôt international: PCT/EP2001/015164
(87) Numéro de publication internationale: WO 2002/057096

(56) Documents cités:
- DE-A- 2 604 431
- US-A- 4 307 767
- US-A- 5 836 366
- US-A- 5 971 047

## Description

La présente invention concerne un pneumatique, et plus particulièrement les flancs et bourrelets d'un tel pneumatique.

Les brevets français FR 2 699 121 et FR 2 716 645 décrivent un pneumatique à armature de carcasse radiale de faible rapport H/S, H étant la hauteur du pneumatique sur jante et S sa largeur axiale maximale, destiné à être monté sur une jante dont au moins un siège est incliné vers l'extérieur et prolongé axialement à l'extérieur par une saillie de faible hauteur. Ledit pneumatique comporte au moins un bourrelet présentant les caractéristiques suivantes :
a) le profil méridien de la fibre moyenne de l'armature de carcasse est tangent à la tringle d'ancrage de l'armature de carcasse en un point T tel que la tangente TT' fasse avec une parallèle avec l'axe de rotation du pneumatique un angle ∅, ouvert radialement et axialement vers l'extérieur, au moins égal à 70°,
b) il est destiné à être monté sur une jante telle que décrite dans les brevets cités, c'est-à-dire présentant la particularité d'avoir au moins un siège de jante incliné vers l'extérieur, ledit siège étant prolongé axialement à l'intérieur soit par un rebord de jante soit par le fond de jante sur lequel est posé un appui de soutien de bande de roulement, une face latérale dudit appui étant utilisée comme rebord de jante, et ledit siège étant prolongé axialement à l'extérieur par une saillie ou hump de faible hauteur;
c) le contour extérieur du bourrelet a un profil adapté au profil de la jante de montage ci-dessus, et ledit bourrelet a la particularité d'avoir un talon disposé axialement à l'intérieur alors que la pointe de bourrelet est disposée axialement à l'extérieur.

Lorsque la paroi axialement extérieure dudit bourrelet est en retrait axial par rapport à l'extrémité axialement la plus à l'extérieur de la jante, le type de pneumatique décrit ne protège pas les éléments métalliques axialement les plus extérieurs de la jante contre les agressions causées par les trottoirs en roulage urbain. Ce problème peut être résolu par l'adaptation de la forme axialement extérieure de la pointe du bourrelet, adaptation conduisant à recouvrir le bord de la saillie extérieure de la jante par une masse ou protubérance plus ou moins importante de caoutchouc de qualité appropriée, la largeur axiale maximale du contour extérieur de la pointe de bourrelet étant supérieure à l'encombrement ou largeur axiale maximale de la jante de montage.

Le brevet FR 2 779 386 enseigne de munir la protubérance axialement extérieure dudit bourrelet d'incisions de largeur non nulle, de profondeur au plus égale à 5 mm et disposées circonférentiellement parallèles entre elles, ce qui permet de minimiser les conséquences des agressions par les trottoirs sur ladite protubérance axialement extérieure du bourrelet, qui est très sensible d'une part à l'abrasion lorsque le pneumatique frotte sur le trottoir, et d'autre part à l'arrachement de parcelles de gomme suite à l'initiation et la propagation de coupures et/ou cassures.

En même temps que la diminution des glissements entre la paroi extérieure d'une protubérance du fait de la présence de nombreuses lamelles de caoutchouc, il apparaît que la propagation de la dégradation de la masse de caoutchouc est minimisée par ladite présence, ce qui conduit à une atténuation très nette de la perception visuelle des dégâts occasionnés.

La demande FR 2 788 239, qui correspond au préambule de la revendication 1, en vue de minimiser les phénomènes de déroulement d'armature de carcasse autour de l'élément annulaire de renforcement de talon de bourrelet, préconise une modification de l'angle φ que fait la tangente TT', au point de tangence T du profil méridien d'armature de carcasse avec l'élément annulaire du bourrelet, avec l'axe de rotation, ledit angle φ étant compris entre 45° et 70°. L'inclinaison supérieure du profil méridien d'armature de carcasse dans sa partie située dans la zone des bourrelets permet aussi une moindre dégradation des parois axialement extérieures des bourrelets, en particulier les bourrelets placés à l'extérieur du véhicule équipé de tels pneumatiques, mais aussi entraîne de multiples inconvénients et en particulier une forte diminution des rigidités radiale, transversale et longitudinale, ce qui n'est pas sans conséquence sur le comportement du véhicule.

Afin d'obtenir un pneumatique, considéré monté sur une jante ayant au moins un siège incliné vers l'extérieur, présentant des rigidités non dégradées tout en permettant aux bourrelets du pneumatique et à la jante de ne pas être endommagés par les chocs et/ou frottements de toutes natures, l'invention propose de combiner le profil méridien d'armature de carcasse à tangente 45°-70° avec une structure particulière de flanc dite à anneau additionnel.

Le pneumatique, conforme à l'invention, comprend au moins deux bourrelets réunis à une bande de roulement par l'intermédiaire, de deux flancs, au moins le premier bourrelet ayant un siège dont la génératrice a son extrémité axialement intérieure sur un cercle de diamètre supérieur au diamètre du cercle sur lequel se trouve son extrémité axialement extérieure, et une armature de carcasse formée d'au moins une nappe, ancrée dans ledit premier bourrelet à au moins un élément annulaire d'ancrage de bourrelet et dont le profil méridien, lorsque le pneumatique est monté sur sa jante de service et gonflé à sa pression recommandée, a une tangente TT', au point de tangence T dudit profil avec l'élément d'ancrage dudit premier bourrelet, faisant avec l'axe de rotation un angle φ₂ ouvert vers l'extérieur au plus égal à 70°. En outre, le flanc de ce pneumatique prolongeant radialement ledit premier bourrelet comprend :
- un anneau additionnel de flanc inextensible situé axialement à l'intérieur d'au moins une nappe d'armature de carcasse (nappe dite axialement extérieure) et,
- axialement à l'intérieur de la nappe axialement extérieure, un profilé de mélange caoutchouteux s'étendant radialement entre l'élément annulaire d'ancrage de bourrelet et l'anneau additionnel de flanc.

La nappe de carcasse axialement extérieure peut être radiale, c'est-à-dire une nappe comportant des éléments de renforcement parallèles entre eux dans la nappe et faisant avec la direction circonférentielle un angle compris entre 80° et 90°. Elle peut être aussi formée d'éléments inclinés par rapport à la direction circonférentielle en faisant un angle pouvant être compris entre 60° et 80°.

Il faut entendre par élément annulaire d'ancrage de bourrelet tout élément de renforcement qui permet de reprendre les efforts de tension d'armature de carcasse sous l'effet de la pression de gonflage. Cet élément d'ancrage peut être, comme connu en soi, une tringle formée de fils ou câbles circonférentiels, ou plus généralement un empilement de plusieurs bandes de fils ou câbles faisant avec la direction circonférentielle un angle nul ou au plus égal à 10°. L'ancrage se fait, comme connu; par adhésion, sur une longueur suffisante de l'armature de carcasse sur l'élément annulaire et la surface d'adhésion peut avoir une forme semi-torique ou torique (l'ancrage est alors réalisé par enroulement autour de l'élément annulaire), ou avoir une forme cylindrique, tronconique ou avoir une forme de couronne circulaire (l'ancrage est alors réalisé par insertion de l'armature de carcasse entre des bandes ou amas de fils ou câbles circonférentiels ou quasi-circonférentiels).

L'anneau additionnel de flanc est dit inextensible, ce qui doit être entendu comme étant un anneau qui, lorsqu'il est soumis à une force de tension circonférentielle égale à 10% de sa force de rupture, présente un allongement relatif au plus égal à 1%. Ledit anneau peut se présenter sous plusieurs formes :
- soit sous la forme d'un monofilament de dimensions de section transversale plus ou moins importantes ;
- soit sous la forme d'un ensemble câblé, que ce soit une tringle ou un câble proprement dit ;
- soit sous la forme d'un empilement de bandes de fils ou câbles circonférentiels, cet empilement pouvant être parallèle au plan équatorial ou parallèle à un plan radial.

De manière équivalente, l'anneau additionnel peut être réalisé dans un matériau unique présentant une rigidité d'extension appropriée et, dans tous les cas, supérieure à la rigidité moyenne des mélanges caoutchouteux ; cet anneau additionnel peut être réalisé notamment en matière plastique, en polyuréthane, en polyamide aromatique, en résine renforcée par différentes fibres (carbone, verre, ...), ou en métal. Cet anneau additionnel peut aussi être constitué de deux matériaux ou plus.
L'anneau additionnel peut être creux pour limiter l'augmentation de poids résultant de sa présence dans chaque flanc.

Dans la combinaison revendiquée, l'anneau additionnel de flanc est préférentiellement situé radialement à une distance de la base du premier bourrelet au plus égale aux deux tiers de la hauteur H sur jante du pneumatique, ce qui permet de conserver l'intégralité des propriétés anti-décoincement dudit premier bourrelet.
Un facteur essentiel dans le fonctionnement de chaque flanc du pneumatique comprenant un anneau additionnel et un profilé caoutchouteux réside dans le couplage mécanique créé, entre l'anneau additionnel de flanc et le bourrelet, par l'intermédiaire du profilé caoutchouteux prolongeant radialement vers l'intérieur ledit anneau.
La rigidité transversale du pneumatique est en partie fonction de l'inclinaison de la droite joignant les deux centres de gravité des sections méridiennes de l'élément annulaire d'ancrage et de l'anneau de flanc : ledit segment de droite fait de manière avantageuse un angle φ₁ ouvert vers l'extérieur d'au plus 70° avec la direction axiale.
Quant au profilé caoutchouteux radialement entre l'élément annulaire d'ancrage et l'anneau additionnel de flanc, il est composé d'au moins un mélange possédant une dureté Shore A au moins égale à 65 points, de manière à présenter une bonne résistance aux efforts de compression pour ainsi augmenter la rigidité du flanc en opposant une résistance à des déplacements de l'anneau additionnel vers l'intérieur du pneumatique.
Le profilé peut en outre comporter un deuxième mélange de dureté Shore A inférieure à 65 points : dans ce cas, le mélange à forte dureté Shore est radialement le plus proche de l'anneau additionnel de flanc alors que le mélange à faible dureté Shore A est radialement le plus proche de l'élément annulaire d'ancrage, ce qui facilite le montage du pneumatique sur sa jante de service.
De manière également équivalente, l'anneau additionnel de flanc et le profilé peuvent être intégrés dans un même élément unique faisant par exemple l'objet d'une réalisation indépendante de la fabrication du pneumatique lui-même et être ensuite incorporé dans le pneumatique au moment de sa fabrication.
Cet élément unique peut être réalisé dans un matériau unique ou bien dans un matériau composite (c'est à dire un matériau comprenant une matrice renforcée par des renforts dans le but de conférer audit élément des rigidités appropriées). Lorsque l'élément unique remplace un anneau additionnel et un profilé de mélange caoutchouteux, sa section transversale est appropriée pour obtenir la rigidité voulue et par là l'effet mécanique recherché dans le pneumatique. Bien entendu, pour obtenir une bonne liaison entre l'élément unique et les mélanges de caoutchouc du pneumatique, on peut prévoir un traitement de la surface dudit élément qui améliore l'adhésion ; des orifices peuvent en outre être réalisés au travers dudit élément pour laisser le passage aux mélanges de caoutchouc du pneumatique en cours de moulage et vulcanisation.

Les propriétés d'anti-décoincement des bourrelets du pneumatique sont améliorées par un ancrage par enroulement autour d'une tringle à section quasi-circulaire, pour former un retournement s'étendant dans un profilé de mélange caoutchouteux de forte dureté Shore A, profilé sous forme de coin de section transversale correspondant à un secteur circulaire. Ce profilé est connu, et est décrit dans le brevet FR 2 716 645. Le retournement de la nappe de carcasse peut être sensiblement rectiligne et avoir une longueur sensiblement égale à la longueur des côtés du profilé de caoutchouc sous forme de coin. Il peut être situé à l'intérieur dudit profilé, il peut former soit le côté radialement interne, soit le côté radialement externe dudit profilé, étant entendu qu'il faut admettre par convention que le retournement est dans les derniers cas considéré comme s'étendant dans le profilé.

De manière préférentielle, le retournement de la nappe d'armature de carcasse a une longueur telle qu'il est en contact avec le périmètre total du profilé ou coin ; il forme ainsi les deux côtés radialement externe et interne du profilé de caoutchouc ainsi que le côté opposé au sommet ou centre dudit profilé, et son extrémité est située axialement au-delà du point d'intersection des deux côtés externe et interne. La partie du retournement immédiatement adjacente à la partie dudit retournement enroulée autour de la tringle, peut former en premier lieu le côté radialement externe du profilé ou coin puis ensuite le côté opposé au sommet dudit profilé, puis en dernier lieu le côté radialement interne pour se terminer au delà du point de jonction des deux côtés externe et interne. Elle peut aussi former d'abord le côté radialement interne du profilé, puis le côté opposé au sommet dudit profilé, puis en dernier lieu le côté radialement externe pour se terminer de la même manière que précédemment.

L'armature de carcasse est avantageusement composée d'au moins deux nappes de carcasse, pouvant être formées d'éléments de renforcement radiaux ou croisés d'une nappe à la suivante, la deuxième nappe de carcasse ou nappe axialement intérieure étant située axialement à l'intérieur de l'anneau additionnel de flanc et à l'intérieur du profilé radialement situé entre l'élément d'ancrage et ledit anneau additionnel. Selon que la première nappe de carcasse axialement extérieure est ancrée ou non à l'élément d'ancrage de bourrelet avec retournement, ladite deuxième nappe peut être ancrée ou non audit élément d'ancrage.

Une meilleure protection des flancs et bourrelets est assurée si axialement à l'intérieur de la nappe de carcasse la plus axialement à l'intérieur est disposé un profilé de caoutchouc sous forme de croissant, ce profilé ayant une épaisseur maximale sensiblement au niveau de la ligne de plus grande largeur axiale du pneumatique et une épaisseur minimale au niveau respectivement des bords d'armature de sommet et de l'élément d'ancrage de carcasse.

Si l'on considère que le premier bourrelet est le bourrelet du pneumatique qui se trouve axialement à l'extérieur du véhicule, alors le deuxième bourrelet, axialement à l'intérieur du véhicule, ne nécessite pas la même protection au niveau des agressions extérieures et n'exige pas les mêmes propriétés d'anti-décoincement. Bien que bourrelets et flancs puissent être géométriquement parfaitement symétriques par rapport au plan équatorial, et de même constitution, il est judicieux en fonction des propriétés recherchées de créer une dissymétrie entre flancs et bourrelets des deux côtés du plan équatorial.

La dissymétrie peut aussi se concrétiser par l'adoption pour le deuxième bourrelet d'un profil ou contour extérieur usuel, c'est-à-dire avec une paroi axialement extérieure rectiligne, sensiblement perpendiculaire à l'axe de rotation et destinée à être en contact avec le rebord de jante axialement à l'extérieur de ladite jante, et axialement à l'intérieur dans le prolongement de ladite paroi un siège de bourrelet incliné vers l'intérieur et destiné à entrer en contact avec le siège de jante.

Que ce soit un deuxième bourrelet à siège incliné vers l'extérieur ou un deuxième bourrelet à siège incliné vers l'intérieur, le profil méridien d'au moins la nappe, faisant partie de l'armature de carcasse, axialement extérieure à l'anneau additionnel de flanc, peut être identique dans les deux bourrelets et flancs ou différent. Il est avantageux, pour optimiser les rigidités de bourrelet et flanc, de conférer à ladite nappe de carcasse, ancrée dans le deuxième bourrelet à l'élément d'ancrage, un profil méridien dont la tangente au point de tangence dudit profil avec ledit élément fait avec l'axe de rotation un angle au moins égal à 20° et différent de - et préférentiellement supérieur à - l'angle que fait la tangente au profil méridien de la nappe ancrée à l'élément d'ancrage dans les premiers bourrelet et flanc.

La dissymétrie peut se concrétiser par l'adoption, pour les deuxièmes bourrelet et flanc, d'un flanc sans anneau additionnel de flanc, ce qui conduit à la possibilité d'avoir, dans les deuxièmes bourrelet et flanc, un profil méridien de nappe de carcasse dont la tangente au point de tangence avec l'élément d'ancrage du deuxième bourrelet fait avec l'axe de rotation un angle ouvert vers l'extérieur supérieur à 70°et au plus égal à 90°.

Que ce soit un deuxième bourrelet avec un siège incliné vers l'extérieur ou incliné vers l'intérieur, que ce soit un profil méridien de nappe de carcasse tendu (courbure faible) ou non tendu (courbure forte), que ce soit un deuxième flanc avec anneau additionnel ou non, il est avantageux que les deux sièges de bourrelets aient des diamètres différents, le deuxième bourrelet ayant préférentiellement le diamètre le plus grand et étant le bourrelet situé à l'intérieur du véhicule équipé des pneumatiques considérés, ceci afin de faciliter le montage du pneumatique et optimiser le volume interne de la jante.

Les caractéristiques et avantages de l'invention seront mieux compris à l'aide de la description qui suit et qui se réfère au dessin, illustrant à titre non limitatif des exemples d'exécution, dessin sur lequel,
- la figure 1 représente schématiquement une variante simplifiée de l'ensemble conforme à l'invention,
- la figure 2 représente de la même manière une deuxième variante,
- la figure 3 représente une variante de pneumatique asymétrique,
- la figure 4 représente une deuxième variante de pneumatique asymétrique.

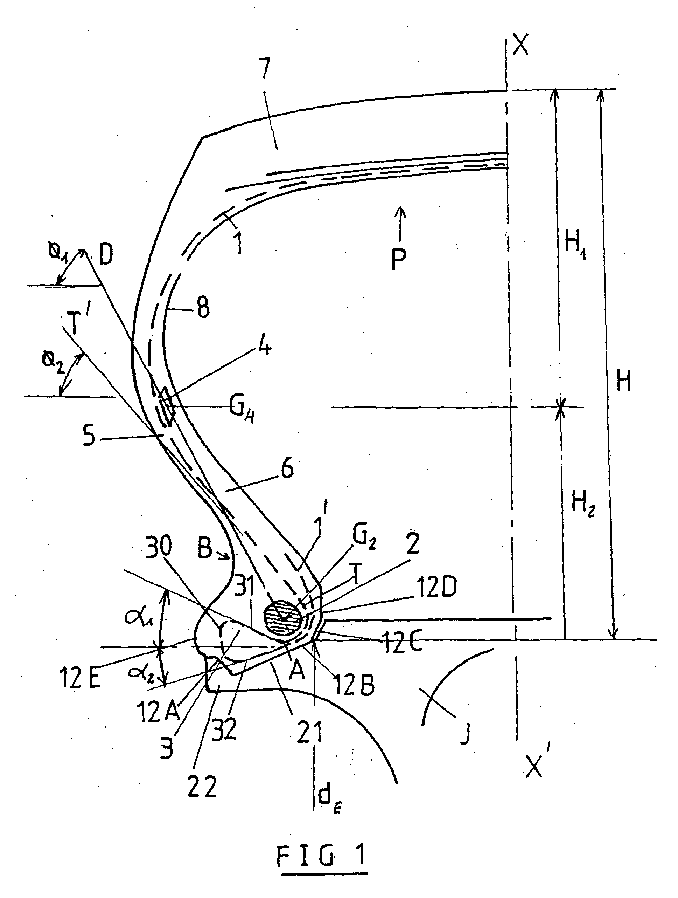

Le pneumatique P, représenté en section méridienne sur la figure 1, est un pneumatique symétrique par rapport au plan équatorial XX'. Il comprend une bande de roulement 7 reliée à deux bourrelets B par deux flancs. L'armature de carcasse 1 est composée d'une seule nappe 1A radiale d'éléments de renforcement textiles et radiaux, et ancrée dans chaque bourrelet B par enroulement autour d'un élément d'ancrage 2, qui est une tringle de type "tressé", pour former un retournement 1'A. Ledit retournement 1'A entoure, après un premier passage sous la tringle et en allant axialement de l'intérieur à l'extérieur, un profilé ou coin 3 de mélange caoutchouteux de forte dureté Shore A, supérieure à 65 points. Le profilé 3 présente une section sous forme de secteur circulaire avec deux côtés 31 et 32 issus d'un sommet A localisé sous la section de la tringle 2, le côté radialement externe 31 faisant avec une parallèle à l'axe de rotation un angle α₁ aigu, compris entre 20° et 70° et ouvert radialement vers l'extérieur, et le côté radialement interne 32 faisant avec ladite parallèle un angle α₂ aigu compris entre 0° et 30° et ouvert radialement vers l'intérieur. Un troisième côté 30 opposé au sommet A complète la section du coin 3. Le retournement 1'A forme, après passage sous tringle, le côté radialement supérieur 31 puis le côté 30 opposé au sommet A, puis le côté 32 radialement inférieur, pour ensuite repasser sous la tringle 2 et remonter radialement dans le bourrelet B ; pour posséder une extrémité radialement plus éloignée de l'axe de rotation que le centre de gravité de la section méridienne de la tringle 2.

Le profil méridien de l'unique nappe de carcasse 1A, lorsque le pneumatique est monté sur sa jante de service J et gonflé à sa pression de service, a un sens de courbure constant sur toute sa longueur, et est tel que la tangente TT' au point de tangence T dudit profil avec la tringle 2 des bourrelets B fait avec l'axe de rotation un angle φ₂ ouvert axialement et radialement vers l'extérieur et égal à 50°. L'inclinaison de ladite tangente, non seulement permet un meilleur serrage sur jante des bourrelets ainsi constitués, une meilleure résistance au décoincement, une bonne tenue vis à vis du déroulement d'armature de carcasse, mais aussi d'utiliser pour le type de bourrelet considéré une jante étroite d'où une meilleure protection des parties axialement extérieures de bourrelet et de jante, et ce sans dégrader les rigidités des flancs et bourrelets du pneumatique.

Le bourrelet B du pneumatique considéré est un bourrelet dont le talon est axialement à l'intérieur et la pointe axialement à l'extérieur. Il présente un profil ou contour extérieur composé, en allant axialement de l'intérieur à l'extérieur, d'une paroi 12D sensiblement perpendiculaire à l'axe de rotation, paroi qui peut éventuellement prendre latéralement appui sur la face axialement extérieure d'un anneau de soutien de bande de roulement de pneumatique, ladite paroi 12D du bourrelet B étant prolongée axialement à l'extérieur par une génératrice tronconique 12C, faisant avec une parallèle à l'axe de rotation un angle de 45°, ouvert axialement vers l'intérieur et radialement vers l'extérieur. Ladite génératrice 12C est elle-même prolongée axialement à l'extérieur par une seconde génératrice tronconique 12B de siège de bourrelet faisant avec la direction de l'axe de rotation un angle égal à 15°, ouvert axialement vers l'intérieur et radialement vers l'extérieur. Ladite génératrice 12B est dite inclinée vers l'extérieur, son extrémité axialement extérieure étant sur un cercle de diamètre inférieur au diamètre du cercle sur lequel se trouve son extrémité axialement intérieure. Une génératrice tronconique 12A, prolongeant axialement à l'extérieur la génératrice 12B et faisant avec la direction de l'axe de rotation un angle égal à 45°, ouvert axialement et radialement vers l'extérieur, ainsi qu'une paroi 12E, courbe dans l'exemple décrit, complètent le contour du bourrelet B. Alors que la génératrice 12B prendra appui sur le siège de jante 21, incliné vers l'extérieur, la génératrice 12A prendra appui sur la paroi axialement intérieure de la saillie (ou hump) 22 de la jante J, inclinée d'un angle égal à l'angle que fait la génératrice 12A. La portion de bourrelet, adjacente à la paroi 12D et à la génératrice 12C, constitue, vue en section méridienne, le talon du bourrelet B. La portion de bourrelet, adjacente à la génératrice 12B, à la génératrice 12A et partiellement à la paroi 12E, constitue la pointe du bourrelet B.

Un anneau additionnel de renforcement 4 inextensible est disposé dans le flanc 5 du pneumatique, et le centre de gravité G₄ de sa section méridienne est radialement situé à une distance H₂ de la base du bourrelet égale à 31% de la hauteur H du pneumatique (mesurée d'une part sur le pneumatique monté sur jante et gonflé à la pression recommandée et d'autre part par rapport à la base de bourrelet qui est aussi base de jante).
Par définition, la base d'un bourrelet vue en coupe méridienne correspond à la droite parallèle à l'axe de rotation du pneumatique et passant par le point de la génératrice du siège de bourrelet radialement le plus éloigné dudit axe de rotation.
L'anneau additionnel 4 divise le flanc renforcé par l'armature de carcasse 1 en deux parties distinctes, d'une part axialement et d'autre part radialement. La partie axialement extérieure est renforcée par la nappe de carcasse 1, alors que la partie axialement intérieure correspond à la partie de flanc renforcée dans la partie radialement inférieure par un profilé 6 de mélange caoutchouteux unique de grande dureté Shore A égale à 70 points. La dureté Shore A est mesurée selon la norme ASTM D2240.

Ce profilé 6 s'étend entre l'anneau additionnel 4 et le point de tangence T de la nappe de carcasse 1 avec la tringle 2 d'ancrage de la nappe de carcasse de façon à pouvoir être sollicité en compression lorsque l'anneau additionnel 4 est déplacé axialement vers l'intérieur du pneumatique et à réaliser un couplage mécanique plus ou moins fort entre l'anneau additionnel et la tringle d'ancrage..
La partie radialement supérieure de flanc de hauteur radiale H₁ correspond à la partie où la nappe de carcasse 1A est pratiquement recouverte axialement à l'intérieur de la seule couche de gomme intérieure 8 : ladite partie - dite "partie pneumatique de flanc" - est en conséquence de faibles rigidités comparativement aux rigidités de la partie radialement inférieure de flanc, alors que la deuxième partie radialement inférieure, de hauteur H₂, comprenant le profilé 6 est dite "partie structurelle de flanc".

L'épaisseur du profilé 6, sensiblement constante sur toute sa hauteur, est en moyenne égale, dans le cas étudié, à 7 mm. La deuxième partie de flanc radialement inférieure est fortement inclinée par rapport à la direction axiale. On pose que l'inclinaison de ladite partie est représentée par la direction de la droite D qui réunit les centres de gravité des sections méridiennes respectivement G₂ de la tringle d'ancrage 2 et G₄ de l'anneau additionnel 4 : cette droite D fait avec la direction axiale un angle φ₁ ouvert axialement et radialement vers l'extérieur au plus égal à 70°, et dans le cas décrit égal à 59°.

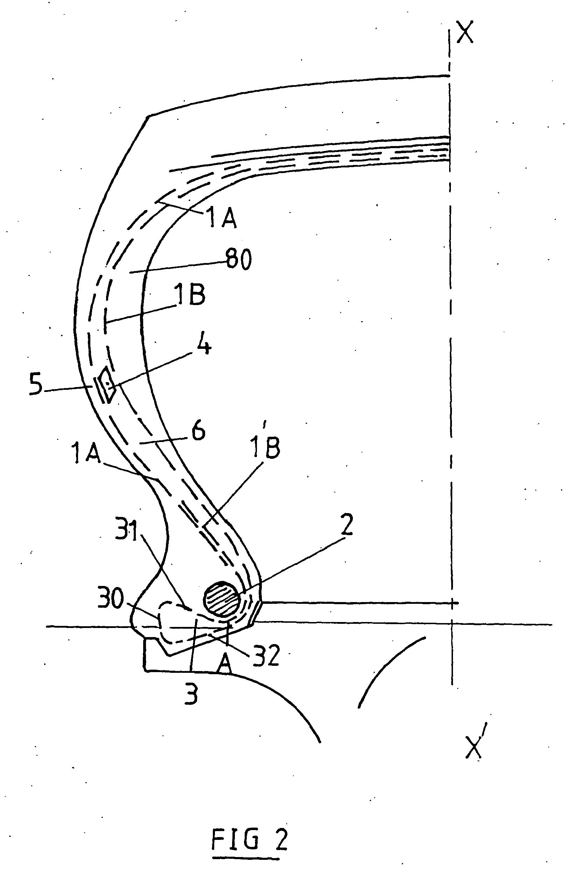

Le pneumatique représenté sur la figure 2 diffère de celui de la figure 1 par les trois caractéristiques principales suivantes:
(a) l'armature de carcasse est formée d'au moins deux nappes 1A et 1B de carcasse, au moins une nappe radiale 1A qui est la nappe axialement extérieure à l'anneau additionnel 4 de flanc, et au moins une nappe radiale 1B située axialement à l'intérieur dudit anneau ;
(b) la nappe ancrée par enroulement dans le bourrelet B à la tringle 2 est la nappe axialement intérieure 1B, et le retournement 1'B ainsi formé entoure de même que précédemment un profilé ou coin 3 de mélange caoutchouteux de forte dureté Shore A ; le retournement 1'B forme par contre, après passage sous tringle 2, le côté radialement inférieur 32 puis le côté 30 opposé au sommet A, puis le côté 31 radialement supérieur, pour ensuite repasser sous la tringle 2 et remonter radialement dans le bourrelet B, pour posséder une extrémité radialement plus éloignée de l'axe de rotation que le centre de gravité de la section méridienne de la tringle 2 ; cette extrémité est suffisamment éloignée dudit axe pour que la longueur de jonction entre le retournement 1'B et le bord de la nappe axialement externe 1A, qui n'est pas enroulée autour de la tringle 2, soit suffisante pour résister aux efforts de tension existants ; les nappes de carcasse 1A et 1B enserrent dans la partie radialement inférieure du flanc 5 du pneumatique le profilé 6 de mélange caoutchouteux à haute dureté Shore A ;
(c) le flanc 5 est renforcé axialement à l'intérieur par un profilé 80 de caoutchouc sous forme de croissant avec une épaisseur maximale sensiblement au-dessus sur la ligne de plus grande largeur axiale du pneumatique, ladite épaisseur pouvant être comprise entre 5 et 15 mm suivant les dimensions et types de pneumatique étudiés.

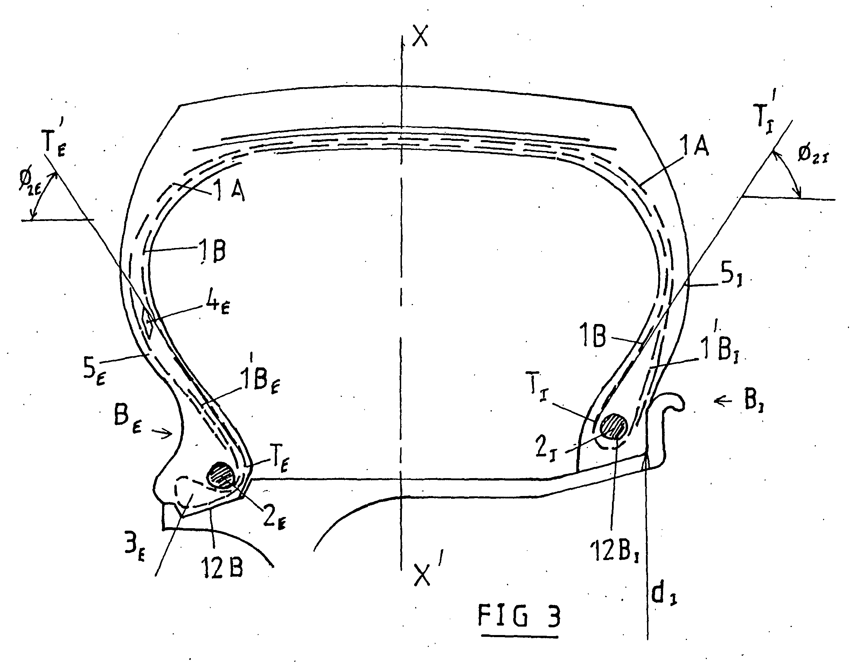

Les deux exemples qui précèdent concernent des pneumatiques présentant un plan de symétrie correspondant au plan équatorial XX'. Les deux exemples qui suivent concernent par contre des pneumatiques dits asymétriques. Le pneumatique, montré sur la figure 3, a une dissymétrie pouvant se caractériser principalement par la présence :
a) d'un côté du plan équatorial, de premiers flanc et bourrelet tels que décrits précédemment, c' est-à-dire :
   a-1) avec un premier bourrelet B_{E} à siège incliné 12B_{E} vers l'extérieur et comportant un coin 3_{E} de caoutchouc de forte dureté Shore A, autour duquel est enroulé le retournement 1'B d'une nappe de carcasse 1B, nappe dont le profil méridien présente au point de tangence T_{E} avec l'élément annulaire d'ancrage 2_{E} une tangente T_{E}T'_{E} faisant avec l'axe de rotation un angle φ_{2E} au plus égal à 70°,
   a-2) avec un premier flanc 5_{E} comportant un anneau additionnel de flanc, 4_{E} axialement à l'extérieur duquel se trouve au moins une nappe de carcasse 1A,
b) de l'autre côté dudit plan équatorial, de deuxièmes flanc 5₁ et bourrelet B_{I} usuels, c'est-à-dire :
   b-1) avec un deuxième bourrelet B_{I} à siège 12B_{I} incliné vers l'intérieur renforcé par un élément d'ancrage 2_{I} autour duquel vient s'enrouler au moins une nappe de carcasse 1B, ledit élément 2_{I} étant surmonté radialement d'un profilé de caoutchouc sensiblement de forme triangulaire,
   b-2) avec un deuxième flanc 5_{I} renforcé par au moins une nappe de carcasse 1B sans la présence d'anneau additionnel de flanc 4.

Le premier bourrelet B_{E} du pneumatique de la figure 3, destiné à être monté sur une jante dont le premier siège de jante est incliné vers l'extérieur, est identique à celui montré sur la figure 2, et le flanc 5_{E} est, comme dans les exemples précédents renforcé par un anneau additionnel 4_{E} de flanc. Quant au deuxième bourrelet B_{I}, destiné à être monté sur une jante avec rebord de jante perpendiculaire à l'axe de rotation et siège de jante incliné vers l'intérieur ou éventuellement plat, il est simplement renforcé par un élément d'ancrage ou tringle 2_{I}, surmonté radialement d'un profilé généralement de forme triangulaire et prolongé radialement par un flanc n'ayant aucun renfort additionnel. Le pneumatique asymétrique de la figure 3 comprend donc une armature de carcasse formée de deux nappes 1B et 1A de câbles textiles radiaux, la nappe axialement intérieure 1B étant enroulée dans chaque bourrelet à une tringle 2 d'ancrage pour former des retournements 1'B_{E} et 1'B_{I}, et la nappe de carcasse axialement extérieure 1A étant dans chaque bourrelet axialement adjacente aux retournements 1'B_{E} ou 1'B_{I} de la nappe 1B.

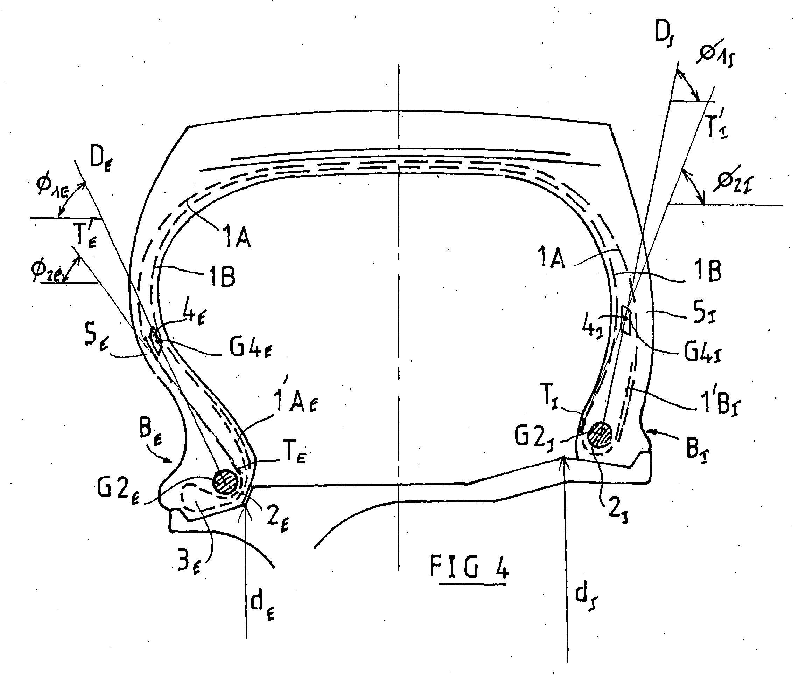

Si, dans l'exemple qui précède, les profils méridiens de la nappe de carcasse 1B ancrée aux tringles 2_{E} et 2_{I} ont, aux points de tangence T_{E} et T_{I} desdits profils avec les tringles 2_{E} et 2_{I} des tangentes T_{E}T'_{E} et T_{I}T'_{I} faisant avec l'axe de rotation des angles φ_{2E} et φ_{2I} sensiblement égaux, il est avantageux, pour améliorer le comportement de certains véhicules sur route, de différencier de part et d'autre du plan équatorial les profils méridiens de nappes de carcasse ancrées aux tringles de bourrelets. Le pneumatique montré sur la figure 4 comprend une armature de carcasse composée de deux nappes 1A et 1B. La nappe de carcasse 1A, axialement extérieure, est, du premier côté du plan équatorial (à gauche sur la figure 4), ancrée à la tringle 2_{E} de bourrelet par enroulement pour former un retournement l'A_{E} tel que décrit dans les exemples montrés sur les figures 1 et 2, c'est-à-dire un retournement formant les côtés d'un profilé ou coin 3_{E} de mélange caoutchouteux de forte dureté. Elle n'est pas, du deuxième côté du plan équatorial (à droite sur la figure 4), ancrée à la tringle 2_{I} par enroulement mais possède un bord axialement adjacent au retournement 1'B_{I} de la nappe 1B axialement intérieure. Cette nappe 1B forme du deuxième côté du plan équatorial un retournement simple 1'B_{I} remontant radialement dans le bourrelet, et a du premier côté de ce plan un bord accolé de manière adjacente au retournement 1'A_{E} de la nappe axialement extérieure 1A. Les deux bourrelets B_{E} et B_{I} sont du type à sièges inclinés vers l'extérieur et destinés à être montés sur une jante ayant de chaque côté du plan équatorial des sièges de jante dont les extrémités axialement intérieures sont sur de cercles de diamètres supérieurs aux diamètres des cercles sur lesquels se trouvent leurs extrémités axialement extérieures, lesdits sièges étant prolongés axialement à l'extérieur par des saillies (ou humps) de faibles hauteurs.
Quant aux deux flancs 5_{E} et 5_{I}, en plus des deux nappes de carcasse, ils sont renforcés par deux anneaux additionnels 4_{E} et 4_{I} axialement à l'intérieur de la nappe 1A, et ayant des sections méridiennes dont les centres de gravité sont sensiblement à égale distance de l'axe de rotation du pneumatique. Du premier côté du plan équatorial, la droite DE, joignant les centres de gravité G2_{E} et G4_{E}, respectivement de la tringle 2_{E} et de l'anneau 4_{E}, fait avec l'axe de rotation un angle φ_{1E} de 55°, alors que la tangente T_{E}T'_{E} au profil méridien de la nappe 1A au point de tangence T_{E} avec la tringle 2_{E} fait avec l'axe de rotation un angle φ_{2E} égal à 42°. Du deuxième côté du plan équatorial, le flanc 5_{I} du pneumatique est dit plus tendu, dans le sens où la tangente T_{I}T'_{I} au profil méridien de la nappe 1B au point de tangence T_{I} avec la tringle 2_{I} fait avec l'axe de rotation un angle φ_{2I} plus grand que l'angle φ_{2E}, puisque égal à 75°et où la droite D_{I} joignant les centres de gravité G_{2I} et G4_{I} des sections méridiennes respectivement de la tringle 2_{I} et de l'anneau 4_{I} fait avec ledit axe de rotation un angle φ_{1I} égal à 85°, et donc très supérieur à l'angle φ_{1E}·

Les figures 3 et 4 montrent une autre asymétrie, qui est très avantageuse pour faciliter le montage des pneumatiques sur leurs jantes de service et également leur démontage. Cette asymétrie consiste à avoir des pneumatiques dont les bourrelets ont des diamètres différents. Par définition, le diamètre d'un bourrelet est la distance séparant les deux points d'intersection, diamétralement opposés et les plus éloignés de l'axe de rotation, des génératrices de sièges de jante avec les génératrices des parois axialement adjacentes auxdits sièges. Dans le cas d'un siège dit incliné vers l'extérieur, le diamètre dE (figure 1) est mesuré au niveau de l'intersection de la génératrice 12B de siège avec la génératrice 12C axialement intérieure. Dans le cas d'un bourrelet usuel, ledit diamètre d_{I} est mesuré au niveau de l'intersection de la génératrice de siège avec la génératrice de la paroi verticale de bourrelet (figure 3, côté droit). La différence de diamètre relative (d_{I} -d_{E})/d_{E} peut être comprise entre 3% et 10%.

## Revendications

1. - Pneumatique P comprenant au moins deux bourrelets B réunis à une bande de roulement (7) par l'intermédiaire de deux flancs (5), au moins le premier bourrelet B ayant un siège (12B) dont la génératrice a l'extrémité axialement intérieure sur un cercle de diamètre supérieur au diamètre du cercle sur lequel se trouve l'extrémité axialement extérieure, et une armature de carcasse (1), formée d'au moins une nappe (1A, 1B), ancrée dans ledit premier bourrelet B à au moins un élément annulaire d'ancrage (2) de bourrelet, et dont le profil méridien, lorsque le pneumatique est monté sur sa jante de service et gonflé à sa pression recommandée, a une tangente TT', au point de tangence T dudit profil avec l'élément d'ancrage (2) dudit premier bourrelet, faisant avec l'axe de rotation un angle φ₂ ouvert vers l'extérieur au plus égal à 70°, **caractérisé en ce que** le flanc (5) prolongeant radialement ledit premier bourrelet comprend :
• un anneau additionnel (4) de flanc inextensible situé axialement à l'intérieur d'au moins une nappe d'armature de carcasse (1A), nappe dite axialement extérieure,
• un profilé (6) de mélange caoutchouteux s'étendant radialement entre l'élément annulaire d'ancrage (2) de bourrelet et l'anneau additionnel (4) de • flanc, et axialement situé à l'intérieur de la nappe axialement extérieure (1A).

2. - Pneumatique P selon la revendication 1, **caractérisé en ce que** l'anneau additionnel de flanc (4) est situé radialement à une distance H₂ de la base du bourrelet au plus égale aux deux tiers de la hauteur H sur jante du pneumatique.

3. - Pneumatique P selon l'une des revendications 1 ou 2, **caractérisé en ce que** la droite D, joignant les deux centres de gravité G₂ et G₄ des sections méridiennes de la tringle d'ancrage (2) et de l'anneau de flanc (4) respectivement, fait un angle φ₁ ouvert vers l'extérieur d'au plus 70° avec la direction axiale.

4. - Pneumatique P selon l'une des revendications 1 à 3, **caractérisé en ce que** le profilé (6) caoutchouteux entre élément d'ancrage (2) et anneau additionnel (4) est composé d'au moins un mélange dont la dureté Shore A au moins égale à 65 points.

5. - Pneumatique P selon la revendication 4, **caractérisé en ce que** la nappe d'armature de carcasse (1A, 1B) est ancrée par enroulement autour d'une tringle (2) à section quasi-circulaire, pour former un retournement (1'A, 1'B) s'étendant dans un profilé (3) de mélange caoutchouteux de forte dureté Shore A, profilé (3) sous forme de coin de section transversale correspondant à un secteur circulaire avec un sommet A radialement sous la tringle d'ancrage (2), sommet A dont sont issus deux côtés (31, 32), le côté radialement supérieur (31) faisant avec l'axe de rotation un angle compris entre 20° et 70°, et le côté radialement inférieur (32) faisant avec le même axe un angle compris entre 0° et 30°, lesdits deux côtés étant réunis par un troisième côté (30) opposé au sommet A.

6. - Pneumatique P selon la revendication 5, **caractérisé en ce que** le retournement (1'A, 1'B) de la nappe (1A, 1B) d'armature de carcasse a une longueur telle qu'il est en contact avec le périmètre total du profilé (3) ou coin, et forme ainsi les deux côtés radialement externe et interne (31, 32) du profilé de caoutchouc ainsi que le côté (30) opposé au sommet ou centre A dudit profilé (3), son extrémité étant située axialement au-delà du point d'intersection A des deux côtés externe et interne (31, 32).

7. - Pneumatique P selon la revendication 6, **caractérisé en ce que** le retournement (1'A, 1'B) de la nappe (1A, 1B) de carcasse forme en premier lieu le côté radialement externe (31) du profilé ou coin (3), puis ensuite le côté (30) opposé au sommet A dudit profilé (3), puis en dernier lieu le côté radialement interne (32) pour se terminer au delà du point de jonction A des deux côtés externe et interne (31, 32).

8. - Pneumatique P selon la revendication 6, **caractérisé en ce que** le retournement (1'A, 1'B) de la nappe (1A, 1B) de carcasse forme en premier lieu le côté radialement interne (32) du profilé (3), puis le côté opposé (30) au sommet A dudit profilé (3), puis en dernier lieu le côté radialement externe (31) pour se terminer au delà du point de jonction A des deux côtés externe et interne (31, 32).

9. - Pneumatique P selon la revendication 1, **caractérisé en ce que** l'armature de carcasse est composée d'au moins deux nappes (1A et 1B) de carcasse, la deuxième nappe (1B), dite nappe axialement intérieure, étant axialement à l'intérieur de l'anneau additionnel de flanc (4) et à l'intérieur du profilé (6) radialement situé entre l'élément d'ancrage (2) et ledit anneau additionnel (4).

10. - Pneumatique P selon la revendication 9, **caractérisé en ce que**, axialement à l'intérieur de la nappe de carcasse (1B) la plus axialement à l'intérieur, est disposé un profilé (80) de caoutchouc sous forme de croissant, avec une épaisseur la plus forte sensiblement au niveau de la ligne de plus grande largeur axiale du pneumatique et la plus faible au niveau respectivement des bords d'armature de sommet et de l'élément d'ancrage (2).

11. - Pneumatique P selon l'une des revendications 1 à 10, **caractérisé en ce que** les premiers bourrelet B_{E} et flanc (5_{E}) et les deuxièmes bourrelet B_{I} et flanc (5_{I}) sont symétriques par rapport au plan équatorial XX' du pneumatique P.

12. - Pneumatique P selon la revendication 3, **caractérisé en ce que** les premiers bourrelet B_{E} et flanc (5_{E}) et les deuxièmes bourrelet B_{I} et flanc (5_{I}) sont dissymétriques par rapport au plan équatorial XX' du pneumatique.

13. - Pneumatique P selon la revendication 12, **caractérisé en ce que** le deuxième bourrelet B_{I} a un siège (12B_{I}) dont la génératrice a son extrémité axialement intérieure sur un cercle de diamètre supérieur au diamètre du cercle sur lequel se trouve son extrémité axialement extérieure, au moins la nappe radiale formant l'armature de carcasse ayant un profil méridien, lorsque le pneumatique est monté sur sa jante de service et gonflé à sa pression recommandée, avec un sens de courbure constant dans ledit deuxième bourrelet B_{I} et le flanc (5_{I}) le prolongeant radialement, et une tangente T_{I}T'_{I} au point de tangence T_{I} dudit profil avec l'élément d'ancrage 2_{I} de bourrelet faisant avec l'axe de rotation un angle φ_{2I} ouvert vers l'extérieur au moins égal à 20°.

14. - Pneumatique P selon la revendication 13, **caractérisé en ce que** la tangente T_{I}T'_{I} au point de tangence T_{I} dudit profil avec l'élément d'ancrage 2_{I} de deuxième bourrelet B_{I} fait avec l'axe de rotation un angle φ_{2I} ouvert vers l'extérieur au plus égal à 90° et supérieur à l'angle φ_{2E} que fait, avec l'angle de rotation, la tangente T_{E}T'_{E} au profil méridien de nappe de carcasse au point de tangence T_{E} dudit profil avec l'élément d'ancrage 2_{E} de premier bourrelet B_{E}.

15. - Pneumatique P selon la revendication 14, **caractérisé en ce que** le deuxième flanc (5_{I}) comprend un anneau additionnel de flanc (4_{I}) inextensible situé axialement à l'intérieur d'au moins une nappe d'armature de carcasse (1A, 1B), nappe dite axialement extérieure, un profilé de mélange caoutchouteux étant radialement situé entre l'élément annulaire (2_{I}) d'ancrage du deuxième bourrelet B_{I} et l'anneau additionnel (4_{I}) de deuxième flanc (5_{I}), et axialement situé à l'intérieur de la nappe axialement extérieure (1A).

16. - Pneumatique P selon la revendication 12, **caractérisé en ce que** le deuxième bourrelet B_{I} a un siège (12B_{I}) dont la génératrice a son extrémité axialement intérieure sur un cercle de diamètre inférieur au diamètre du cercle sur lequel se trouve son extrémité axialement extérieure, ledit deuxième bourrelet étant destiné à être monté sur un siège de jante usuel prolongé axialement à l'extérieur par un rebord de jante.

17. - Pneumatique P selon la revendication 16, **caractérisé en ce que** au moins la nappe (1A, 1B) formant l'armature de carcasse a un profil méridien, lorsque le pneumatique est monté sur sa jante de service et gonflé à sa pression recommandée, avec un sens de courbure constant dans ledit deuxième bourrelet B_{I} et le flanc (5_{I}) le prolongeant radialement, et une tangente T_{I}T'_{I} au point de tangence T_{I} dudit profil avec l'élément d'ancrage (2_{I}) de deuxième bourrelet B_{I} faisant avec l'axe de rotation un angle φ_{2I} ouvert vers l'extérieur supérieur à l'angle φ_{2E} que fait, avec l'angle de rotation, la tangente T_{E}T'_{E} au profil méridien de nappe de carcasse au point de tangence T_{E} dudit profil avec l'élément d'ancrage (2_{E}) de premier bourrelet B_{E}.

18. - Pneumatique P selon la revendication 17, **caractérisé en ce que** le deuxième flanc (5_{I}) comporte un anneau additionnel de flanc (4_{I}), le profil méridien d'au moins la nappe formant l'armature de carcasse ancrée à l'élément d'ancrage (2_{I}) du deuxième bourrelet B_{I} ayant une tangente T_{I}T'_{I} au point de tangence T_{I} dudit profil avec l'élément d'ancrage (2_{I}) de deuxième bourrelet B_{I} faisant avec l'axe de rotation un angle φ_{2I} ouvert vers l'extérieur au plus égal à 90°.

19. - Pneumatique P selon la revendication 12, **caractérisé en ce que** les premier et deuxième bourrelets B_{E} et B_{I} ont des diamètres d_{E} et d_{I} différents.

20. - Pneumatique P selon l'une des revendications 1 à 19, **caractérisé en ce que** l'armature de carcasse (1) comprend au moins une nappe de carcasse (1A, 1B) à éléments de renforcement radiaux.

## Claims

1. A tyre P comprising at least two beads B joined to a tread (7) by means of two sidewalls (5), at least the first bead B having a seat (12B) the generatrix of which has its axially inner end on a circle of diameter greater than the diameter of the circle on which is located the axially outer end, and a carcass reinforcement (1) formed of at least one ply (1A, 1B), anchored in said first bead B to at least one annular bead anchoring element (2), and the meridian profile of which, when the tyre is mounted on its operating rim and inflated to its recommended pressure, has a tangent TT', to the point of tangency T of said profile with the anchoring element (2) of said first bead, forming with the axis of rotation an angle φ₂ open towards the outside at most equal to 70°, **characterised in that** the sidewall (5) radially extending said first bead comprises:
• an inextensible additional sidewall ring (4) located axially to the inside of at least one carcass reinforcement ply (1A), which ply is referred to as "axially outer" ply,
• a profiled element (6) of rubber mix extending radially between the annular bead anchoring element (2) and the additional sidewall ring (4), and located axially to the inside of the axially outer ply (1A),

2. A tyre P according to Claim 1, **characterised in that** the additional sidewall ring (4) is located radially at a distance H₂ from the base of the bead at most equal to two-thirds of the height H on rim of the tyre.

3. A tyre P according to one of Claims 1 or 2, **characterised in that** the straight line D, joining the two centres of gravity G₂ and G₄ of the meridian sections of the anchoring bead wire (2) and the sidewall ring (4) respectively, forms an angle φ₁ open towards the outside of at most 70° with the axial direction.

4. A tyre P according to one of Claims 1 to 3, **characterised in that** the rubber profiled element (6) between the anchoring element (2) and the additional ring (4) is composed of at least one mixture the Shore A hardness of which is at least equal to 65 points.

5. A tyre P according to Claim 4, **characterised in that** the carcass reinforcement ply (1A, 1B) is anchored by winding around a bead wire (2) of quasi-circular section, to form an upturn (1'A, 1'B) extending into a profiled element (3) of rubber mix of high Shore A hardness, which profiled element (3) in the form of a wedge of cross-section corresponding to a sector of a circle with an apex A radially beneath the anchoring bead wire (2), from which apex A there come two sides (31, 32), the radially upper side (31) forming with the axis of rotation an angle of between 20° and 70°, and the radially lower side (32) forming with the same axis an angle of between 0° and 30°, said two sides being joined by a third side (30) opposite the apex A.

6. A tyre P according to Claim 5, **characterised in that** the upturn (1'A, 1'B) of the carcass reinforcement ply (1A, 1B) has a length such that it is in contact with the total perimeter of the profiled element (3) or wedge, and thus forms the two, radially outer and inner, sides (31, 32) of the rubber profiled element and the side (30) opposite the apex or centre A of said profiled element (3), the end thereof being located axially beyond the point of intersection A of the two, outer and inner, sides (31, 32).

7. A tyre P according to Claim 6, **characterised in that** the upturn (1'A, 1'B) of the carcass ply (1A, 1B) forms firstly the radially outer side (31) of the profiled element or wedge (3), then the side (30) opposite the apex A of said profiled element (3), then finally the radially inner side (32), ending beyond the junction point A of the two, outer and inner, sides (31, 32).

8. A tyre P according to Claim 6, **characterised in that** the upturn (1'A, 1'B) of the carcass ply (1A, 1B) forms firstly the radially inner side (32) of the profiled element (3), then the side (30) opposite the apex A of said profiled element (3), then finally the radially outer side (31), ending beyond the junction point A of the two, outer and inner, sides (31, 32).

9. A tyre P according to Claim 1, **characterised in that** the carcass reinforcement is composed of at least two carcass plies (1A and 1B), the second ply (1B), referred to as axially inner ply, being located axially to the inside of the additional sidewall ring (4) and to the inside of the profiled element (6) radially located between the anchoring element (2) and said additional ring (4).

10. A tyre P according to Claim 9, **characterised in that**, axially to the inside of the axially innermost carcass ply (1B), there is arranged a rubber profiled element (80) in the form of a crescent, having a thickness which is greatest substantially at the level of the line of greatest axial width of the tyre and is lowest at the level respectively of the edges of the crown reinforcement and of the carcass anchoring element (2).

11. A tyre P according to one of Claims 1 to 10, **characterised in that** the first bead B_{E} and sidewall (5_{E}) and the second bead B_{I} and sidewall (5_{I}) are symmetrical relative to the equatorial plane XX' of the tyre P.

12. A tyre P according to Claim 3, **characterised in that** the first bead B_{E} and sidewall (5_{E}) and the second bead B_{I} and sidewall (5_{I}) are dissymmetrical relative to the equatorial plane XX' of the tyre.

13. A tyre P according to Claim 12, **characterised in that** the second bead B_{I} has a seat (12B_{I}) the generatrix of which has its axially inner end on a circle of diameter greater than the diameter of the circle on which is located its axially outer end, at least the radial ply forming the carcass reinforcement having a meridian profile, when the tyre is mounted on its operating rim and inflated to its recommended pressure, with a constant direction of curvature in said second bead B_{I} and the sidewall (5_{I}) extending it radially, and a tangent T_{I}T'_{I} to the point of tangency T_{I} of said profile with the bead anchoring element 2_{I} forming with the axis of rotation an angle φ_{2I} open towards the outside at least equal to 20°.

14. A tyre P according to Claim 13, **characterised in that** the tangent T_{I}T'_{I} to the point of tangency T_{I} of said profile with the anchoring element 2_{I} of the second bead B_{I} forms with the axis of rotation an angle φ_{2I} open towards the outside at most equal to 90° and greater than the angle φ_{2E} formed, with the angle [sic] of rotation, by the tangent T_{E}T'_{E} to the meridian profile of the carcass ply at the point of tangency T_{E} of said profile with the anchoring element 2_{E} of the first bead B_{E}.

15. A tyre P according to Claim 14, **characterised in that** the second sidewall (5_{I}) comprises an inextensible additional sidewall ring (4_{I}) located axially to the inside of at least one carcass reinforcement ply (1A, 1B), referred to as "axially outer" ply, a profiled element of rubber mix being radially located between the annular anchoring element (2_{I}) of the second bead B_{I} and the additional ring (4_{I}) of the second sidewall (5_{I}), and axially located to the inside of the axially outer ply (1A).

16. A tyre P according to Claim 12, **characterised in that** the second bead B_{I} has a seat (12B_{I}) the generatrix of which has its axially inner end on a circle of diameter less than the diameter of the circle on which is located its axially outer end, said second bead being intended to be mounted on a conventional rim seat extended axially to the outside by a rim flange.

17. A tyre P according to Claim 16, **characterised in that** at least the ply (1A, 1B) forming the carcass reinforcement has a meridian profile, when the tyre is mounted on its operating rim and inflated to its recommended pressure, with a constant direction of curvature in said second bead B_{I} and the sidewall (5_{I}) radially extending it, and a tangent T_{I}T'_{I} to the point of tangency T_{I} of said profile with the anchoring element (2_{I}) of the second bead B_{I} forming with the axis of rotation an angle φ_{2I} open towards the outside greater than the angle φ_{2E} formed, with the angle [sic] of rotation, by the tangent T_{E}T'_{E} to the meridian profile of the carcass ply at the point of tangency T_{E} of said profile with the anchoring element (2_{E}) of the first bead B_{E}.

18. A tyre P according to Claim 17, **characterised in that** the second sidewall (5_{I}) comprises an additional sidewall ring (4_{I}), the meridian profile of at least the ply forming the carcass reinforcement anchored to the anchoring element (2_{I}) of the second bead B_{I} having a tangent T_{I}T'_{I} to the point of tangency T_{I} of said profile with the anchoring element (2_{I}) of the second bead B_{I} forming with the axis of rotation an angle φ_{2I} open towards the outside of at most 90°.

19. A tyre P according to Claim 12, **characterised in that** the first and second beads B_{E} and B_{I} have different diameters d_{E} and d_{I}.

20. A tyre P according to one of Claims 1 to 19, **characterised in that** the carcass reinforcement (1) comprises at least one carcass ply (1A, 1B) having radial reinforcement elements.

## Patentansprüche

1. Luftreifen P mit mindestens zwei Wülsten B, die über zwei Flanken (5) mit einer Lauffläche (7) verbunden sind, wobei mindestens der erste Wulst B einen Sitz (12B) hat, dessen Mantellinie das axial innere Ende auf einem Kreis mit einem Durchmesser größer als der Durchmesser des Kreises hat, auf dem sich das axial äußere Ende befindet, und mit einer Karkassenbewehrung (1), die von mindestens einer Lage (1A, 1B) geformt wird, die im ersten Wulst B an mindestens einem ringförmigen Wulstverankerungselement (2) verankert ist, und deren Meridianprofil, wenn der Luftreifen auf seine Dienstfelge montiert und auf seinen empfohlenen Druck aufgepumpt ist, eine Tangente TT' im Tangentenpunkt T des Profils mit dem Verankerungselement (2) des ersten Wulsts hat, die mit der Drehachse einen nach außen offenen Winkel φ2 höchstens gleich 70° bildet, **dadurch gekennzeichnet, dass** die Flanke (5), die den ersten Wulst radial verlängert, aufweist:
• einen zusätzlichen undehnbaren Flankenring (4), der sich axial innerhalb mindestens einer Karkassenbewehrungslage (1A), als axial äußere Lage bezeichnet, befindet,
• ein Profilteil (6) aus einer Kautschukmischung, das sich radial zwischen dem ringförmigen Wulstverankerungselement (2) und dem zusätzlichen Flankenring (4) erstreckt und sich axial innerhalb der axial äußeren Lage (1A) befindet.

2. Luftreifen P nach Anspruch 1, **dadurch gekennzeichnet, dass** der zusätzliche Flankenring (4) sich radial in einem Abstand H₂ von der Basis des Wulsts höchstens gleich zwei Drittel der Felgenhöhe H des Luftreifens befindet.

3. Luftreifen P nach einem der Ansprüche 1 oder 2, **dadurch gekennzeichnet, dass** die Gerade D, die die zwei Schwerpunkte G₂ und G₄ der Meridianschnitte des Verankerungswulstkerns (2) bzw. des Flankenrings (4) vereint, einen nach außen offenen Winkel φ₁ von höchstens 70° mit der axialen Richtung bildet.

4. Luftreifen P nach einem der Ansprüche 1 bis 3, **dadurch gekennzeichnet, dass** das Kautschukprofilteil (6) zwischen dem Verankerungselement (2) und dem zusätzlichen Ring (4) aus mindestens einer Mischung zusammengesetzt ist, deren Shore-A-Härte mindestens gleich 65 Punkte ist.

5. Luftreifen P nach Anspruch 4, **dadurch gekennzeichnet, dass** die Karkassenbewehrungslage (1A, 1B) durch Aufwickeln um einen Wulstkern (2) mit praktisch kreisförmigem Querschnitt verankert wird, um einen Umschlag (1'A, 1'B) zu bilden, der sich in einem Profilteil (3) aus einer Kautschukmischung mit hoher Shore-A-Härte erstreckt, einem Profilteil (3) in Form eines Keils mit einem Querschnitt, der einem Kreisausschnitt mit einer Spitze A radial unter dem Verankerungswulstkern (2) entspricht, einer Spitze A, von der zwei Seiten (31, 32) ausgehen, wobei die radial obere Seite (31) mit der Drehachse einen Winkel zwischen 20° und 70° bildet, und die radial untere Seite (32) mit der gleichen Achse einen Winkel zwischen 0° und 30° bildet, wobei die zwei Seiten von einer dritten Seite (30) vereint werden, die der Spitze A entgegengesetzt liegt.

6. Luftreifen P nach Anspruch 5, **dadurch gekennzeichnet, dass** der Umschlag (1'A, 1'B) der Karkassenbewehrungslage (1A, 1B) eine solche Länge hat, dass er mit dem Gesamtperimeter des Profilteils (3) oder Keils in Kontakt steht und so die zwei radial äußeren und inneren Seiten (31, 32) des Kautschuk-Profilteils sowie die der Spitze oder dem Zentrum A des Profilteils (3) entgegengesetzt liegende Seite (30) formt, wobei sein Ende sich axial jenseits des Schnittpunkts A der zwei äußeren und inneren Seiten (31, 32) befindet.

7. Luftreifen P nach Anspruch 6, **dadurch gekennzeichnet, dass** der Umschlag (1'A, 1'B) der Karkassenlage (1A, 1B) zuerst die radial äußere Seite (31) des Profilteils oder Keils (3), dann die der Spitze A des Profilteils (3) entgegengesetzt liegende Seite (30), und dann zuletzt die radial innere Seite (32) formt, um jenseits des Verbindungspunkts A der zwei äußeren und inneren Seiten (31, 32) zu enden.

8. Luftreifen P nach Anspruch 6, **dadurch gekennzeichnet, dass** der Umschlag (1'A, 1'B) der Karkassenlage (1A, 1B) zuerst die radial innere Seite (32) des Profilteils (3), dann die der Spitze A des Profilteils (3) entgegengesetzt liegende Seite (30), und dann zuletzt die radial äußere Seite (31) formt, um jenseits des Verbindungspunkts A der zwei äußeren und inneren Seiten (31, 32) zu enden.

9. Luftreifen P nach Anspruch 1, **dadurch gekennzeichnet, dass** die Karkassenbewehrung aus mindestens zwei Karkassenlagen (1A und 1B) zusammengesetzt ist, wobei die zweite Lage (1B), als axial innere Lage bezeichnet, sich axial im Inneren des zusätzlichen Flankenrings (4) und innerhalb des Profilteils (6) befindet, das sich radial zwischen dem Verankerungselement (2) und dem zusätzlichen Ring (4) befindet.

10. Luftreifen P nach Anspruch 9, **dadurch gekennzeichnet, dass** axial innerhalb der axial am weitesten innen liegenden Karkassenlage (1B) ein Kautschuk-Profilteil (80) in Form eines Halbmonds angeordnet ist, mit einer stärksten Dicke im Wesentlichen in Höhe der Linie größter axialer Breite des Luftreifens und der geringsten Dicke in Höhe der Ränder der Scheitelbewehrung bzw. des Verankerungselements (2).

11. Luftreifen P nach einem der Ansprüche 1 bis 10, **dadurch gekennzeichnet, dass** der erste Wulst B_{E} und die erste Flanke (5_{E}) und der zweite Wulst B_{I} und die zweite Flanke (5_{I}) bezüglich der Äquatorialebene XX' des Luftreifens P symmetrisch sind.

12. Luftreifen P nach Anspruch 3, **dadurch gekennzeichnet, dass** der erste Wulst B_{E} und die erste Flanke (5_{E}) und der zweite Wulst B_{I} und die zweite Flanke (5_{I}) bezüglich der Äquatorialebene XX' des Luftreifens asymmetrisch sind.

13. Luftreifen P nach Anspruch 12, **dadurch gekennzeichnet, dass** der zweite Wulst B_{I} einen Sitz (12B_{I}) hat, dessen Mantellinie ihr axial inneres Ende auf einem Kreis mit einem Durchmesser hat, der größer ist als der Durchmesser des Kreises, auf dem sich ihr axial äußeres Ende befindet, wobei mindestens die die Karkassenbewehrung bildende radiale Lage ein Meridianprofil, wenn der Luftreifen auf seine Dienstfelge montiert und auf seinen empfohlenen Druck aufgepumpt ist, mit einer konstanten Krümmungsrichtung im zweiten Wulst B_{I} und der ihn radial verlängernden Flanke (5_{I}) hat, und eine Tangente T_{I}T'_{I} im Tangentenpunkt T_{I} des Profils mit dem Wulstverankerungselement 2_{I} mit der Drehachse einen nach außen offenen Winkel φ_{2I} mindestens gleich 20° bildet.

14. Luftreifen P nach Anspruch 13, **dadurch gekennzeichnet, dass** die Tangente T_{I}T'_{I} im Tangentenpunkt T_{I} des Profils mit dem Verankerungselement 2_{I} des zweiten Wulsts B_{I} mit der Drehachse einen nach außen offenen Winkel φ_{2I} von höchstens 90° und größer als der Winkel φ_{2E} bildet, den die Tangente T_{E}T'_{E} zum Meridianprofil der Karkassenlage im Tangentenpunkt T_{E} des Profils mit dem Verankerungselement 2_{E} des ersten Wulsts B_{E} mit der Drehachse bildet.

15. Luftreifen P nach Anspruch 14, **dadurch gekennzeichnet, dass** die zweite Flanke (5_{I}) einen zweiten undehnbaren Flankenring (4_{I}) aufweist, der sich axial innerhalb mindestens einer Karkassenbewehrungslage (1A, 1B) befindet, als axial äußere Lage bezeichnet, wobei ein Profilteil aus einer Kautschukmischung sich radial zwischen dem ringförmigen Verankerungselement (2_{I}) des zweiten Wulsts B_{I} und dem zusätzlichen Ring (4_{I}) der zweiten Flanke (5_{I}) und axial im Inneren der axial äußeren Lage (1A) befindet.

16. Luftreifen P nach Anspruch 12, **dadurch gekennzeichnet, dass** der zweite Wulst B_{I} einen Sitz (12B_{I}) hat, dessen Mantellinie ihr axial inneres Ende auf einem Kreis mit einem Durchmesser hat, der kleiner ist als der Durchmesser des Kreises, auf dem sich ihr axial äußeres Ende befindet, wobei der zweite Wulst dazu bestimmt ist, auf einen üblichen Felgensitz montiert zu werden, der axial außen von einem Felgenhorn verlängert wird.

17. Luftreifen P nach Anspruch 16, **dadurch gekennzeichnet, dass** mindestens die Lage (1A, 1B), die die Karkassenbewehrung formt, ein Meridianprofil, wenn der Luftreifen auf seine Dienstfelge montiert und auf seinen empfohlenen Druck aufgepumpt ist, mit einer konstanten Krümmungsrichtung in dem zweiten Wulst B_{I} und der ihn radial verlängernden Flanke (5_{I}) hat, und eine Tangente T_{I}T'_{I}, im Tangentenpunkt T_{I} des Profils mit dem Verankerungselement (2_{I}) des zweiten Wulsts B_{I} mit der Drehachse einen nach außen offenen Winkel φ2I größer als der Winkel φ_{2E} bildet, den die Tangente T_{E}T'_{E} zum Meridianprofil der Karkassenlage im Tangentenpunkt T_{E} des Profils mit dem Verankerungselement (2_{E}) des ersten Wulsts B_{E} mit der Drehachse bildet.

18. Luftreifen P nach Anspruch 17, **dadurch gekennzeichnet, dass** die zweite Flanke (5_{I}) einen zusätzlichen Flankenring (4_{I}) aufweist, wobei das Meridianprofil mindestens der die Karkassenbewehrung bildenden Lage, die im Verankerungselement (2_{I}) des zweiten Wulsts B_{I} verankert ist, eine Tangente T_{I}T'_{I} im Tangentenpunkt T_{I} des Profils mit dem Verankerungselements (2_{I}) des zweiten Wulsts B_{I} hat, die mit der Drehachse einen nach außen offenen Winkel φ_{2I} von höchstens 90° bildet.

19. Luftreifen P nach Anspruch 12, **dadurch gekennzeichnet, dass** der erste und der zweite Wulst B_{E} und B_{I} unterschiedliche Durchmesser d_{E} und d_{I} haben.

20. Luftreifen P nach einem der Ansprüche 1 bis 19, **dadurch gekennzeichnet, dass** die Karkassenbewehrung (1) mindestens eine Karkassenlage (1A, 1B) mit radialen Verstärkungselementen aufweist.
